# EUROPEAN PATENT APPLICATION

(11) **EP 2 813 377 A1**
(43) Date of publication of application: **17.12.2014**
(21) Application number: 14151034.7
(22) Date of filing: 14.01.2014
(51) Int. Cl.: B60C 9/10, B60C 11/00

(54) **Pneumatic bias tire and manufacturing method for the same**

(30) Priority: 12.06.2013 JP 2013124013
(71) Applicant: Sumitomo Rubber Industries, Ltd., Kobe-shi, Hyogo 651-0072 (JP)
(72) Inventor: Fujita, Masayuki, Kobe-shi,, Hyogo 651-0072, (JP)
(74) Representative: TBK

(57) **Abstract**

A pneumatic bias tire in which a crown arc part is less likely to be recessed inward and running performance and abrasion resistance are enhanced, and a manufacturing method for the bias tire, are provided.

The manufacturing method is for a pneumatic bias tire having a carcass in which at least two carcass plies includes carcass cords that are titled relative to the tire equator by an angle ranging from 20° to 50°, and the carcass cords intersect the carcass cords of the other carcass plies. The manufacturing method includes a green tire forming step of forming a green tire, and a vulcanization step of vulcanizing the green tire. In the vulcanization step, a ground-contact surface Y, on a tire meridian cross-section, of a tread portion 2 is formed so as to have a tread profile 2a including: a crown arc part 10 that forms a crown region TC and projects outward in a tire radial direction with a radius of curvature R1; and shoulder arc parts 11 that form shoulder regions TS, and project outward in the tire radial direction with a radius of curvature R2 greater than the radius of curvature R1.

## Description

### BACKGROUND OF THE INVENTION

### Field of the Invention

The present invention relates to pneumatic bias tires in which profiles of tread portions, and the like are improved, and a manufacturing method for the pneumatic bias tires.

### Description of the Background Art

Pneumatic tires are mainly classified into radial tires and bias tires. In recent years, use of bias tires tends to be reduced. However, for racing karts for which use of radial tires is prohibited, bias tires are frequently used.

A pneumatic bias tire typically includes a carcass in which at least two carcass plies are layered such that carcass cords intersect the carcass cords of the other carcass plies (for example, Japanese Laid-Open Patent Publication No. 2006-176077). An angle of the carcass cords relative to the tire equator ranges from about 20° to about 50°.

A pneumatic bias tires is manufactured by execution of a green tire forming process step for forming a green tire including a carcass, and a vulcanization process step for vulcanizing the green tire in a vulcanization mold. In the vulcanization process step, the green tire is pressed by a balloon-like bladder from the inside to expand, and is pressed against a forming surface of the vulcanization mold. Thus, a tread profile corresponding to the forming surface of the vulcanization mold is formed for a tread portion.

In a pneumatic bias tire for use in racing karts, volume of rubber disposed in a tread portion is small. Further, sidewall portions are reinforced by, for example, carcass plies being turned up, as compared to the tread portion. Therefore, in the pneumatic bias tire for use in racing karts, stiffness of the tread portion tends to be lower than stiffness of the sidewall portions. In a case where such a tire is manufactured, expansion of the tread portion is greater than expansion of the sidewall portions in the vulcanization process step, and an angle of a carcass cord in a crown region including the tire equator, relative to the tire equator, is reduced. Namely, in the vulcanization process step, reduction of an angle of the carcass cord occurs in the crown region of the tread portion.

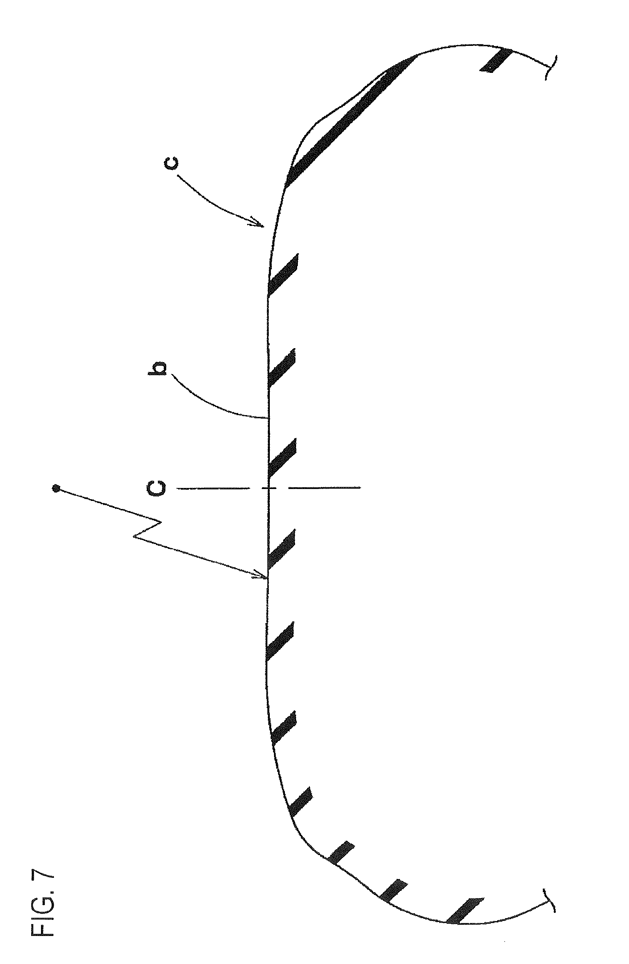

Since the angle of the carcass cord is reduced, stiffness in the tire circumferential direction becomes higher in the crown region than in shoulder regions disposed lateral to the crown region. Therefore, when the tire is inflated to a normal internal pressure, expansion of the crown region is prevented. Therefore, as shown in FIG. 7, a crown region b may have a tread profile a that is recessed inward in the tire radial direction.

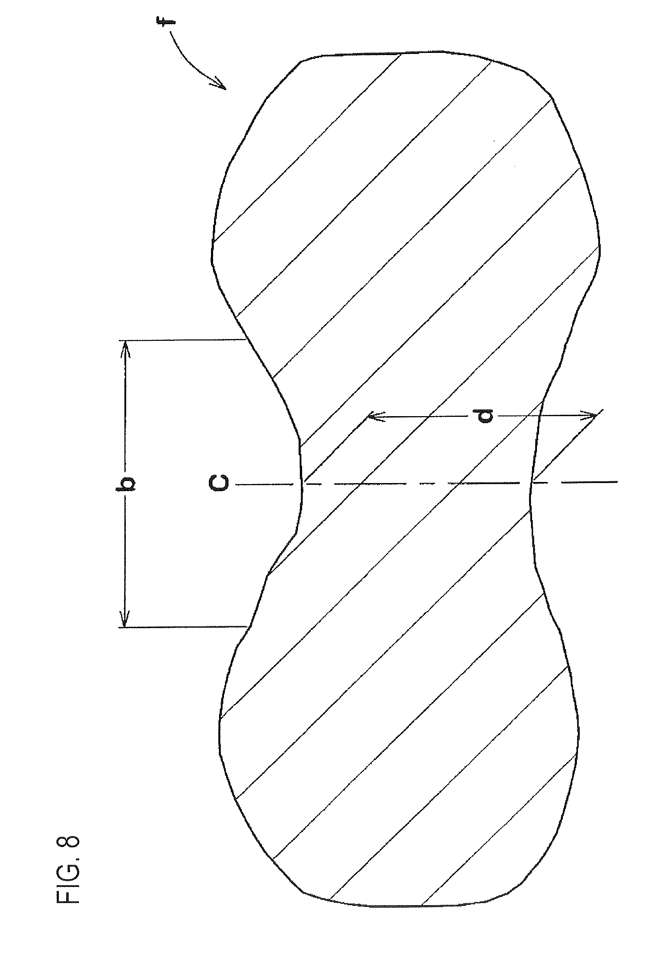

As shown in FIG. 8, when a tire having the tread profile a as described above is under a normal load, a shape of a ground-contact surface f is such that a length d, in the tire circumferential direction, of the crown region b is extremely reduced. This causes deterioration of running performance such as grip performance and traction performance, and reduction of abrasion resistance.

The present invention is made in view of the above problem, and a main object of the present invention is to provide a pneumatic bias tire in which, in order to improve a tread profile of a tread portion, a crown region of the tread portion is less likely to be recessed when air pressure is charged in the tire, to thereby exhibit excellent running performance and abrasion resistance, and a manufacturing method for manufacturing the pneumatic bias tire.

### SUMMARY OF THE INVENTION

A first aspect of the present invention is directed to a manufacturing method for manufacturing a pneumatic bias tire in which a carcass extends from a tread portion through sidewall portions to bead cores of bead portions, the carcass includes at least two carcass plies each having carcass cords tilted relative to a tire equator by an angle ranging from 20° to 50°, and the at least two carcass plies are layered such that the carcass cords intersect the carcass cords of the other carcass plies. The manufacturing method includes: a green tire forming step of forming a green tire including the carcass; and a vulcanization step of expanding and vulcanizing the green tire in a vulcanization mold. In the vulcanization step, a ground-contact surface, on a tire meridian cross-section, of the tread portion is formed so as to have a tread profile including a crown arc part and shoulder arc parts, and the crown arc part forms a crown region including the tire equator, and projects outward in a tire radial direction with a radius of curvature R1, and the shoulder arc parts form shoulder regions that smoothly connect to both ends of the crown arc part, and project outward in the tire radial direction with a radius of curvature R2 greater than the radius of curvature R1.

According to a second aspect of the present invention based on the first aspect, the radius of curvature R1 of the crown arc part ranges from 500 mm to 2000 mm, and the radius of curvature R2 of the shoulder arc parts ranges from 1500 mm to 4000 mm.

According to a third aspect of the present invention based on the first or second aspect, a clip width BW is greater than a rim width of a normal rim for the tire, and the clip width BW represents a distance in a tire axial direction between outer surfaces of the bead portions in the vulcanization mold.

A fourth aspect of the present invention is directed to a pneumatic bias tire in which a carcass extends from a tread portion through sidewall portions to bead cores of bead portions, and the carcass includes at least two carcass plies each having carcass cords tilted relative to a tire equator by an angle ranging from 20° to 50°, and the at least two carcass plies are layered such that the carcass cords intersect the carcass cords of the other carcass plies. In a 5% internal pressure state in which the pneumatic bias tire is mounted to a normal rim and inflated to 5% of a normal internal pressure, an angle α of each carcass cord relative to the tire equator ranges from 20° to 50°, and a ground-contact surface, on a tire meridian cross-section, of the tread portion is formed so as to have a tread profile including a crown arc part and shoulder arc parts, and the crown arc part forms a crown region including the tire equator, and projects outward in a tire radial direction with a radius of curvature R1, and the shoulder arc parts form shoulder regions that smoothly connect to both ends of the crown arc part, and project outward in the tire radial direction with a radius of curvature R2 greater than the radius of curvature R1. In a normal internal pressure state where the bias tire is mounted to the normal rim and inflated to a normal internal pressure under no load, the angle α of the carcass cords is less than the angle α of the carcass cords in the 5% internal pressure state, and the radius of curvature R1 is greater than the radius of curvature R2.

According to a fifth aspect of the present invention based on the fourth aspect, in the 5% internal pressure state, the radius of curvature R1 of the crown arc part ranges from 500 mm to 2000 mm, and the radius of curvature R2 of the shoulder arc parts ranges from 1500 mm to 4000 mm.

According to a sixth aspect of the present invention based on the fourth or fifth aspect, in the normal internal pressure state, a camber value KL that represents a distance in the tire radial direction between the tire equator and tread ground-contact ends ranges from 0.03 times a tread width TW that represents a distance in a tire axial direction between the tread ground-contact ends, to 0.1 times the tread width TW.

According to a seventh aspect of the present invention based on one of the fourth to sixth aspects, in the 5% internal pressure state, a distance CW, in the tire axial direction, to the tire equator from a connection position between the crown arc part and each shoulder arc part, ranges from 0.1 times half the tread width TW/2 that represents a distance from each tread ground-contact end to the tire equator, to 0.5 times half the tread width TW/2.

According to an eighth aspect of the present invention based on the fifth aspect, in a normal load state where the bias tire inflated to the normal internal pressure is under a normal load, the ground-contact surface has a ratio Lc/Ls that ranges from 0.85 to 1.5, and Lc represents a ground-contact length, at the tire equator, in a tire circumferential direction, and Ls represents a maximum ground-contact length, in each shoulder region, in the tire circumferential direction.

A ninth aspect of the present invention is directed to a pneumatic bias tire, for use in a racing kart, according to one of the fourth to eighth aspects of the present invention.

In the pneumatic bias tire according to the present invention, in the vulcanization step, a ground-contact surface, on a tire meridian cross-section, of the tread portion is formed so as to have a tread profile including a crown arc part and shoulder arc parts, and the crown arc part forms a crown region including the tire equator, and projects outward in a tire radial direction with a radius of curvature R1, and the shoulder arc parts form shoulder regions that smoothly connect to both ends of the crown arc part, and project outward in the tire radial direction with a radius of curvature R2 greater than the radius of curvature R1.

Thus, the pneumatic bias tire according to the present invention has such a profile that the crown region projects as compared to the shoulder regions, in the vulcanization mold. In a case where such a tire is inflated to a normal internal pressure, even when expansion of the crown region is prevented and expansion of the shoulder regions is relatively great, the crown region of the tread portion is less likely to be greatly recessed inward in the tire radial direction. Therefore, in the pneumatic bias tire of the present invention, a ground-contact pressure distribution is uniform in the tread portion, and running performance and abrasion resistance are excellent.

### BRIEF DESCRIPTION OF THE DRAWINGS

FIG. 1 is a tire meridian cross-sectional view of a pneumatic bias tire according to an embodiment of the present invention;
FIG. 2 is a development of a carcass of the pneumatic tire;
FIG. 3 is a diagram illustrating a tread profile on the tire meridian cross-section;
FIG. 4 illustrates a ground-contact surface of the tire, in a normal load state, shown in FIG. 1;
FIG. 5 is a tire meridian cross-sectional view illustrating a tire vulcanization mold according to an embodiment of the present invention;
FIG. 6 is a plan view of a carcass of a green tire;
FIG. 7 illustrates a tread profile of conventional arts; and
FIG. 8 illustrates a ground-contact surface of a conventional tire in a normal load state.

### DESCRIPTION OF THE PREFERRED EMBODIMENTS

Hereinafter, an embodiment of the present invention will be described with reference to the drawings.

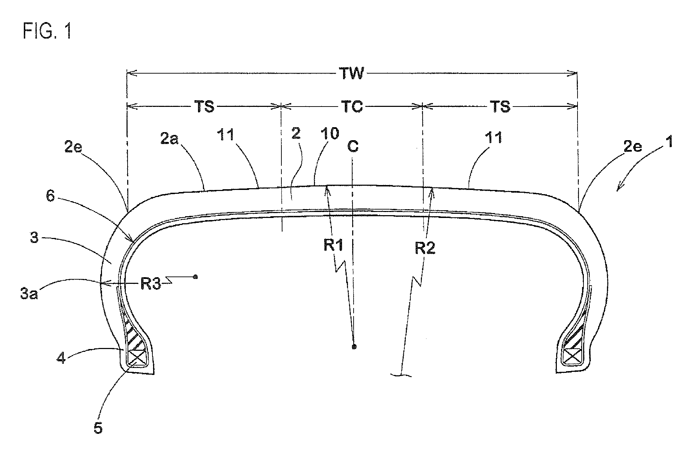

FIG. 1 illustrates a pneumatic bias tire (hereinafter, may be simply referred to as a "tire") 1 according to the present embodiment. In the present embodiment, a tire for racing karts is used as the tire 1.

FIG. 1 shows a tire meridian cross-section of the tire 1, including the tire equator C in a 5% internal pressure state where the tire mounted to a normal rim (not shown) is inflated to 5% of the normal internal pressure. Hereinafter, unless otherwise specified, dimensions, angles, and the like of components of the tire represent values measured in the 5% internal pressure state.

In general, the tire in the 5% internal pressure state has almost the same shape as the same tire which is being vulcanized in a vulcanization mold. Therefore, in the present embodiment, the 5% internal pressure state is used in order to clearly define the cross-sectional shape of the tire 1 in the vulcanization mold after the tire has been manufactured.

In the description herein, the "normal rim" represents a rim defined, in a standardizing system including a standard on which the tire is based, for every tire by the standard. For example, the "standard rim" in the JATMA standard, the "Design Rim" in the TRA standard, and the "Measuring Rim" in the ETRTO standard are included in the normal rim. However, in a case where the tire is for racing karts, the normal rim is a rim defined by Commission Internationale de Karting.

The "normal internal pressure" represents an air pressure defined, in a standardizing system that includes a standard on which the tire is based, for every tire by the standard. For example, the "maximum air pressure" in the JATMA standard, the maximum value recited in the table "TIRE LOAD LIMITS AT VARIOUS COLD INFLATION PRESSURES" in the TRA standard, and the "INFLATION PRESSURE" in the ETRTO standard are included in the normal internal pressure. However, in a case where the tire is for racing karts, the normal internal pressure is an internal pressure defined by Commission Internationale de Karting.

As shown in FIG. 1, the tire 1 includes a carcass 6 that extends from a tread portion 2 through sidewall portions 3 to bead cores 5 of bead portions 4. In the present embodiment, a slick pattern that has no grooves on an outer surface of the tread portion 2 is illustrated. However, grooves may be formed on the outer surface of the tread portion 2.

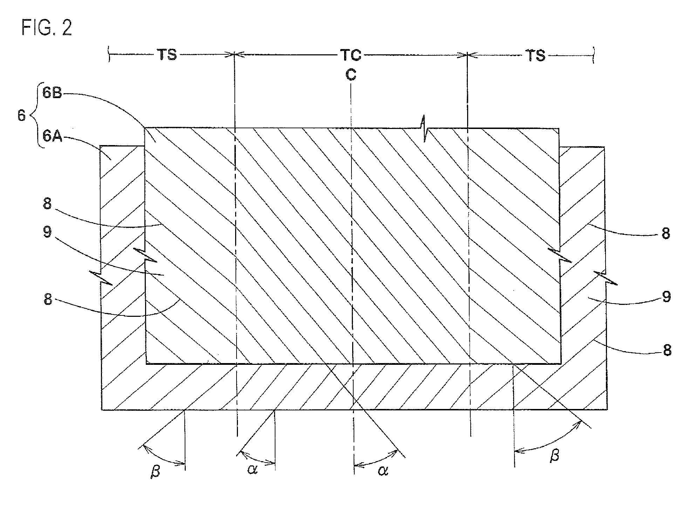

FIG. 2 is a development of the carcass 6 that is developed into a plane. In the present embodiment, the carcass 6 includes, for example, two carcass plies, i.e., an inner carcass ply 6A and an outer carcass ply 6B. Each of the carcass plies 6A and 6B has both end portions that are turned up around the bead cores 5 from the inner side toward the outer side in the tire axial direction.

Each of the carcass plies 6A and 6B has, for example, a plurality of carcass cords 8 aligned with each other, and a topping rubber 9 that covers the carcass cords 8. In the carcass 6, the inner carcass ply 6A and the outer carcass ply 6B are layered such that the carcass cords 8 of the inner carcass ply 6A and the carcass cords 8 of the outer carcass ply 6B intersect each other.

For the carcass cords 8, for example, an organic fiber such as polyester fibers, nylon fibers, rayon fibers, polyethylene naphthalate fibers, and aramid fibers, is advantageously used.

The carcass cords 8 are tilted relative to the tire equator C by an angle α that ranges from 20° to 50°. As described above, also in the bias tire of the present embodiment, expansion of the tread portion 2 tends to be greater than expansion of the sidewall portions 3 in the vulcanization process step. Therefore, the tread portion 2 is also formed such that, in the finished state, the angle α of the carcass cords 8 in a crown region TC including the tire equator C, relative to the tire equator C is smaller than an angle β of the carcass cords 8 in shoulder regions TS. A difference β-α in angle of the carcass cord ranges from about 10° to about 30°. However, each of the angles α and β is in a range from 20° to 50° with respect to the tire equator C.

The tire 1 of the present invention is manufactured by execution of a green tire forming process step for forming a green tire including the carcass 6, and a vulcanization process step for expanding and vulcanizing a green tire 1a in a vulcanization mold 20.

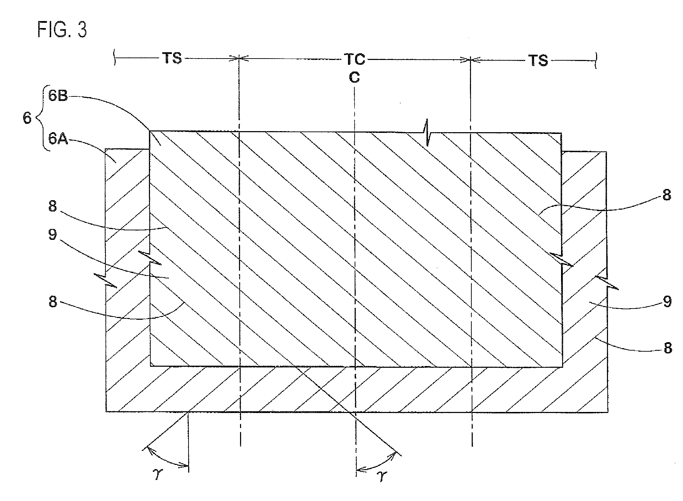

The green tire forming process step is executed in a conventional manner. As shown in FIG. 3, in the green tire forming process step, the carcass plies 6A and 6B are layered over each other such that the carcass cords 8 of the carcass ply 6A and the carcass cords 8 of the carcass ply 6B intersect each other, thereby forming the carcass 6. At this time, the carcass plies 6A and 6B are disposed such that the carcass cords 8 are tilted relative to the tire equator C by a predetermined angle γ. In the present embodiment, the angle γ of the carcass cords 8 relative to the tire equator C is preferably set in, for example, a range from 50° to 80°. The angle γ is reduced in the vulcanization process step as described above.

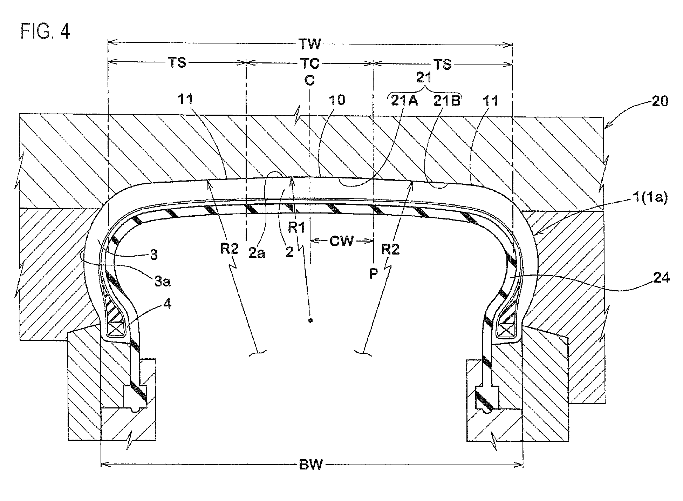

FIG. 4 is a cross-sectional view representing the vulcanization process step. The green tire 1 a obtained in the green tire forming process step is set in the vulcanization mold 20. The green tire 1a having been set is pressed from the inside of the tire by a bladder 24 to expand. At this time, in the green tire 1a, expansion of the crown region TC is greater than expansion of the shoulder regions TS. Thus, as shown in FIG. 2, the carcass cords 8 of the crown region TC become tilted by a reduced angle α. When the angle is thus reduced, stiffness, in the tire circumferential direction, of the crown region TC becomes higher than that of the shoulder regions TS in the tread portion 2.

In the vulcanization process step of the tire manufacturing method of the present invention, on the tire meridian cross-section shown in FIG. 4, the tread portion 2 is formed so as to have a tread profile 2a that includes a crown arc part 10 and shoulder arc parts 11. The crown arc part 10 forms a crown region TC, and projects outward in the tire radial direction with a radius of curvature R1. The shoulder arc parts 11 form shoulder regions TS that smoothly connect to both ends of the crown arc part 10, and project outward in the tire radial direction with a radius of curvature R2 which is greater than the radius of curvature R1. Namely, the tire 1 of the present invention is manufactured through vulcanization in the vulcanization mold 20 that has a tread forming surface 21 including a crown arc forming surface 21 A and shoulder arc forming surfaces 21B. The crown arc forming surface 21A has the radius of curvature R1 and, is for forming the crown region TC. The shoulder arc forming surfaces 21B each have the radius of curvature R2 and are for forming the shoulder regions TS.

Therefore, also in the 5% internal pressure state shown in FIG. 1, the tread portion 2 of the tire 1 has the tread profile 2a that includes: the crown arc part 10 that forms the crown region TC, and projects outward in the tire radial direction with the radius of curvature R1; and the shoulder arc parts 11 that form the shoulder regions TS which smoothly connect to both ends of the crown arc part 10 and that project outward in the tire radial direction with the radius of curvature R2 greater than the radius of curvature R1.

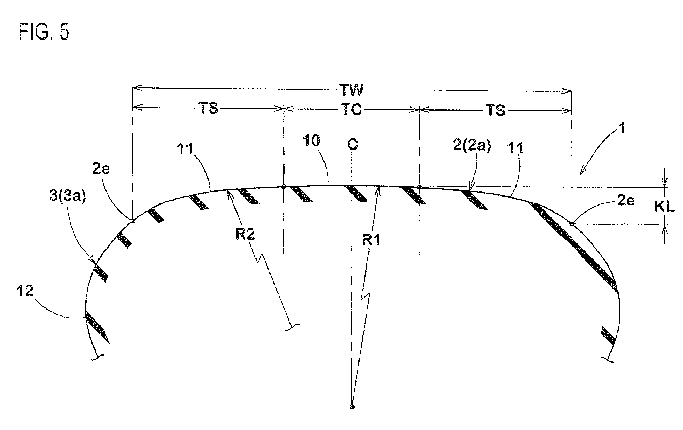

On the other hand, FIG. 5 illustrates the tread profile 2a, on the tire meridian cross-section, in a normal internal pressure state where the tire is inflated to a normal internal pressure under no load. In the tread profile 2a of the tire 1 of the present invention, the radius of curvature R1 of the crown arc part 10 is greater than the radius of curvature R2 of the shoulder arc parts 11 in the normal internal pressure state.

The inventors have placed a focus on reduction in angle of the carcass cords 8 of a bias tire, which occurs in the vulcanization process step. In the crown region TC of the tread portion 2, the reduction in angle of the carcass cords 8 is maximum. Therefore, stiffness, in the tire circumferential direction, of the crown region TC is higher than that of the shoulder regions TS. Thus, expansion of the crown region TC is prevented in the case of the tire 1 being inflated to the normal internal pressure.

However, when the tire 1 is manufactured in the manufacturing method of the present invention, the tire 1 has a tread profile in which the crown region TC projects as compared to the shoulder regions TS in the vulcanization mold. In a case where the tire 1 as described above is inflated to the normal internal pressure, even when expansion of the crown region TC is prevented and expansion of the shoulder regions TS is relatively great, the crown region TC is less likely to be greatly recessed inward in the tire radial direction. Thus, as shown in FIG. 5, the tread profile 2a having a smooth arc shape in which the crown arc part 10 and the shoulder arc parts 11 both project outward in the tire radial direction, can be obtained.

In the 5% internal pressure state shown in FIG. 1, the tread profile 2a preferably includes the one crown arc part 10 and a pair of the shoulder arc parts 11. Namely, the tread profile 2a is preferably formed by two types of arcs. When the tread profile 2a is formed by three or more types of arcs, a ground-contact pressure is likely to change in portions where the arcs are connected with each other, in the normal internal pressure state, and abrasion resistance may be reduced.

Further, in the 5% internal pressure state, the radius of curvature R1 of the crown arc part 10 preferably ranges from 500 mm to 2000 mm. In a case where the radius of curvature R1 of the crown arc part 10 is less than 500 mm, the radius of curvature of the crown arc part 10 is not sufficiently increased in the normal internal pressure state, and the profile is such that the crown region TC projects. Thus, cornering performance or abrasion resistance may be deteriorated. On the other hand, in a case where the radius of curvature R1 of the crown arc part 10 is greater than 2000 mm, the crown region TC may be recessed inward in the tire radial direction in the normal internal pressure state. Further, in the normal internal pressure state, the radius of curvature R1 of the crown arc part 10 preferably ranges from 300 mm to 1500 mm, and more preferably ranges from 500 mm to 1000 mm.

Similarly, in the 5% internal pressure state, the radius of curvature R2 of each shoulder arc part 11 preferably ranges from 1500 mm to 4000 mm. In a case where the radius of curvature R2 of the shoulder arc parts 11 is less than 1500 mm, a ground-contact width of the tread portion 2 is reduced in the normal load state, and traction performance and braking performance may be deteriorated. On the other hand, in a case where the radius of curvature R2 of the shoulder arc parts 11 is greater than 4000 mm, a ground-contact pressure of the shoulder arc parts 11 is increased, and abrasion resistance may be reduced.

As shown in FIG. 4, in the 5% internal pressure state, a distance CW, in the tire axial direction, to the tire equator C from a connection position P between the crown arc part 10 and each shoulder arc part 11, ranges, for example, from 0.1 times to 0.5 times half a tread width TW/2, and preferably ranges from 0.15 times to 0.3 times half the tread width TW/2. Half the tread width TW/2 represents a width from a tread ground-contact end 2e to the tire equator C. In a case where the distance CW in the tire axial direction is less than 0.1 times half the tread width TW/2, the radius of curvature of the crown arc part 10 is not sufficiently increased in the normal internal pressure state, and the profile in which the crown region TC projects may be generated. Thus, cornering performance and abrasion resistance may be deteriorated. On the other hand, in a case where the distance CW in the tire axial direction is greater than 0.5 times half the tread width TW/2, the crown region TC may be recessed inward in the tire radial direction in the normal internal pressure state. The tread ground-contact end 2e refers to a ground-contact end portion of the tire 1 which is in the normal internal pressure state and under the normal load.

As shown in FIG. 5, the tread profile 2a is such that a camber value KL preferably ranges from 0.03 times to 0.1 times the tread width TW and more preferably ranges from 0.04 times to 0.07 times the tread width TW in the normal internal pressure state. The camber value KL represents a distance, in the tire radial direction, between the tire equator C and the tread ground-contact end 2e. In a case where the camber value KL is less than 0.03 times the tread width TW, stiffness of the crown region TC becomes high, and the crown region TC is less likely to expand when air pressure is charged. As a result, in the tire 1, a tread profile including the crown arc part 10 that is recessed inward, may be formed. On the other hand, in the tire 1, in a case where the camber value KL is greater than 0.1 times the tread width TW, the ground-contact width becomes small in the normal load state, whereby side grip performance may be deteriorated.

As shown in FIG. 1, in the tire 1, an outer surface 3a of each sidewall portion 3 is formed by a side arc part 12 having a radius of curvature R3 in the 5% internal pressure state. The radius of curvature R3 of the side arc part 12 preferably ranges from 20 mm to 200 mm, and more preferably ranges from 30 mm to 60 mm. In a case where the radius of curvature R3 of the side arc part 12 is less than 20 mm, a length, in the tire radial direction, of the sidewall portion 3 cannot be appropriately obtained. On the other hand, in a case where the radius of curvature R3 of the side arc part 12 is greater than 200 mm, the side arc part 12 has almost a straight line shape, and is less likely to be bent.

As shown in FIG. 4, in the vulcanization process step, a clip width BW that is a distance, in the tire axial direction, between outer surfaces of the bead portions 4 in the vulcanization mold is set so as to be preferably greater than a rim width of a normal rim for the tire 1. The clip width BW is set so as to be more preferably greater than the rim width, and be more preferably less than or equal to 1.5 times the rim width. In a case where the clip width BW is less than or equal to the rim width of the normal rim, the tread width TW is reduced in the normal internal pressure state, whereby side grip performance may be deteriorated. On the other hand, in a case where the clip width BW is greater than 1.5 times the rim width of the normal rim, the crown arc part 10 is likely to be recessed inward in the tire radial direction in the normal internal pressure state, whereby braking performance and traction performance may be deteriorated.

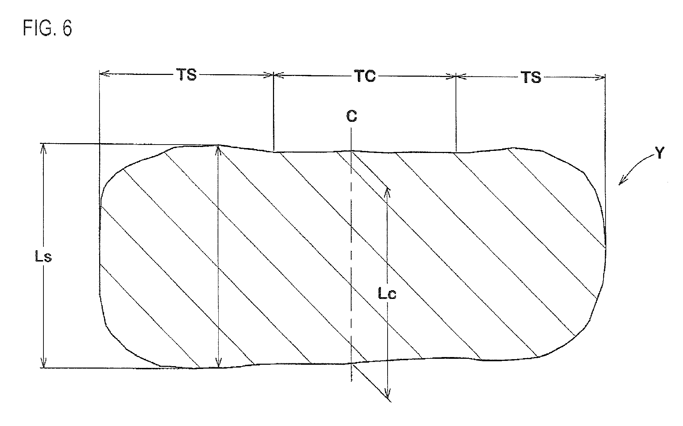

FIG. 6 illustrates a shape of a ground-contact surface Y of the tread portion 2 in the normal load state in which the tire 1 having the tread profile 2a of the present embodiment is under the normal load. In the tire 1 of the present embodiment, a ground-contact length Lc, in the tire circumferential direction, of the crown region is increased, and the ground-contact surface is horizontally elongated smoothly, as compared to the shape of the ground-contact surface shown in FIG. 8. Therefore, in the tire 1 of the present invention, running performance such as grip performance and traction performance, and abrasion resistance are enhanced.

In particular, in the ground-contact surface Y of the tire 1, a ratio Lc/Ls of the ground-contact length Lc, in the tire circumferential direction, at the tire equator C relative to a maximum ground-contact length Ls, in the tire circumferential direction, at the shoulder region TS preferably ranges from 0.85 to 1.5. In a case where the ratio Lc/Ls is less than 0.85, a sufficient ground-contact area in the crown region TC cannot be obtained, whereby grip performance, braking performance, and traction performance may be deteriorated. On the other hand, in a case where the ratio Lc/Ls is greater than 1.5, the ground-contact width is reduced, and grip performance at the cornering may be deteriorated. In this viewpoint, the ratio Lc/Ls is more preferably greater than or equal to 1.0, and is more preferably not greater than 1.4.

In the description herein, the "normal load" represents a load defined, in a standardizing system that includes a standard on which the tire is based, for every tire by the standard. For example, the "maximum load capacity" in the JATMA standard, the "maximum value" recited in the table "TIRE LOAD LIMITS AT VARIOUS COLD INFLATION PRESSURES" in the TRA standard, and the "LOAD CAPACITY" in the ETRTO standard are included in the normal load. However, in a case where the tire is for racing karts, the normal load is a load defined by Commission Internationale de Karting.

Although the embodiment has been described in detail above, the present invention is not limited to the above embodiment, and various modifications can be implemented. Although the usage of the tire 1 of the present embodiment is not limited to any specific one, the tire 1 may be advantageously used for, for example, racing karts.

### [Examples]

Bias tires for racing karts, which were produced as samples based on specifications of Table 1 were mounted as rear tires for racing karts. The racing karts having the bias tires mounted thereto were caused to run on a test course, and sensory evaluation by a driver was made for side grip performance, traction performance, and braking performance. Further, a running time was measured. After the test running was ended, the surfaces of the tires were checked with naked eyes, to evaluate abrasion resistance based on the abrasion (worn state of the surface). The evaluation for each test was made with five point scale. The greater the point is, the better the performance is. Further, in Table 1, an average of the evaluation points of each test is indicated as an overall evaluation.

The main specifications common to the tires and the like are as follows.

| | |
|---|---|
| Test vehicle: | racing kart having engine displacement of 100 cc |
| Front tire: | size: 10×4.50-5 |
| | internal pressure: 100 kPa |
| Rear tire: | size: 11×7.10-5 |
| | internal pressure: 100 kPa |
| Rim: | front: 4.5 rear: 8.0 |
| Road surface: | DRY asphalt road |
| Running distance: | one lap 734 (m) × 7 times |

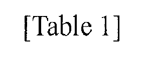

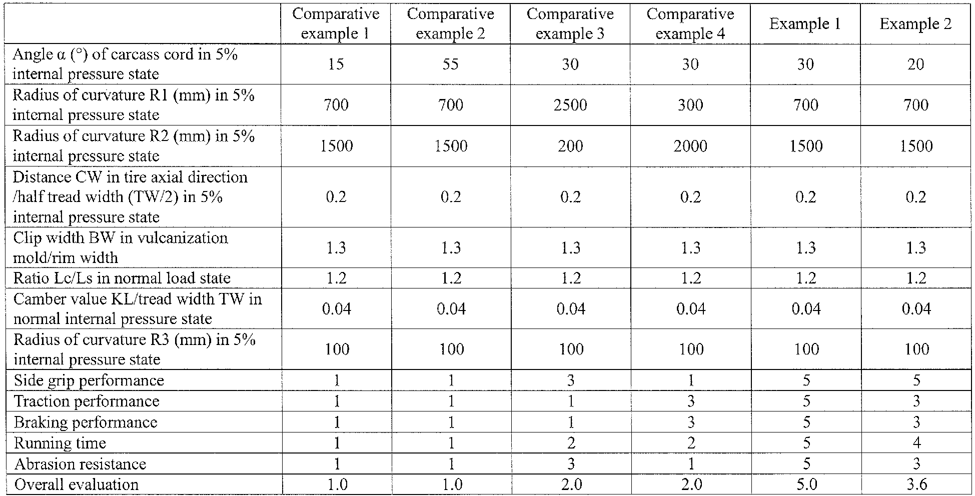

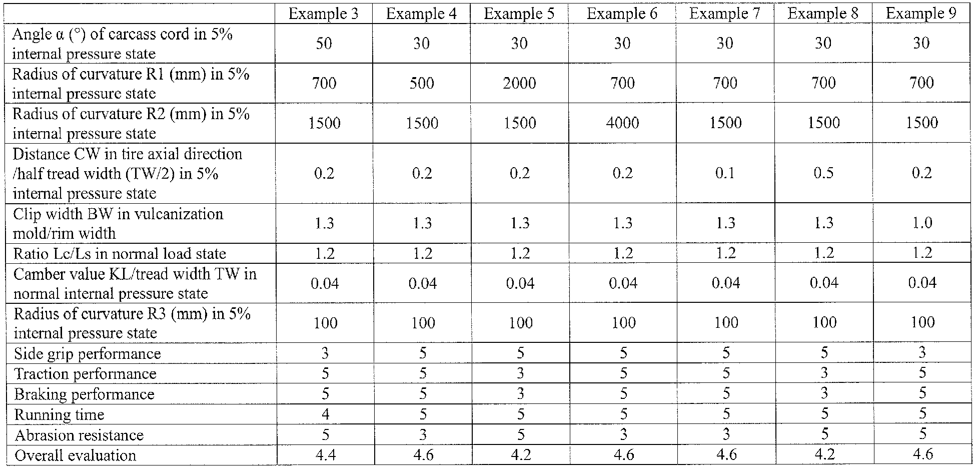

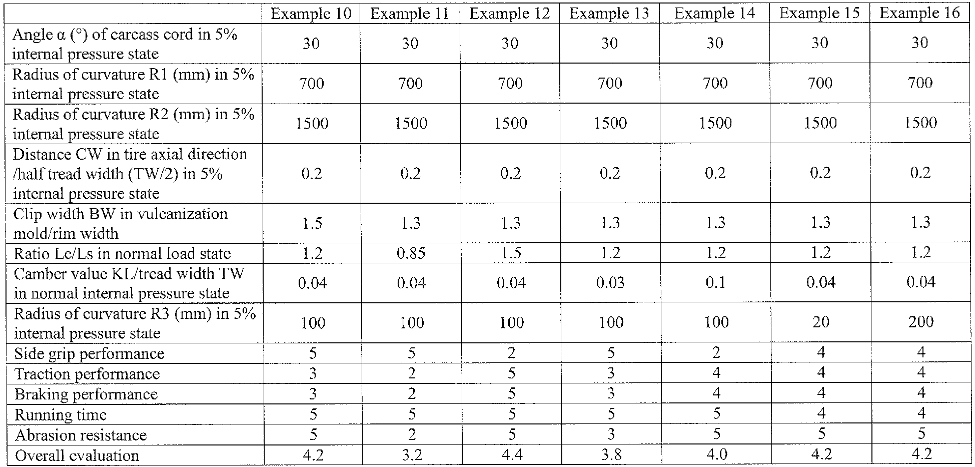

As indicated in Table 1, it is confirmed that, in each of the tires of Examples, the crown arc part is less likely to be recessed inward, and ground-contact pressure distribution is uniform in the tread portion, and running performance and abrasion resistance are enhanced.

A pneumatic bias tire in which a crown arc part is less likely to be recessed inward and running performance and abrasion resistance are enhanced, and a manufacturing method for the bias tire, are provided.

The manufacturing method is for a pneumatic bias tire having a carcass in which at least two carcass plies includes carcass cords that are titled relative to the tire equator by an angle ranging from 20° to 50°, and the carcass cords intersect the carcass cords of the other carcass plies. The manufacturing method includes a green tire forming step of forming a green tire, and a vulcanization step of vulcanizing the green tire. In the vulcanization step, a ground-contact surface Y, on a tire meridian cross-section, of a tread portion 2 is formed so as to have a tread profile 2a including: a crown arc part 10 that forms a crown region TC and projects outward in a tire radial direction with a radius of curvature R1; and shoulder arc parts 11 that form shoulder regions TS, and project outward in the tire radial direction with a radius of curvature R2 greater than the radius of curvature R1.

## Claims

1. A manufacturing method for manufacturing a pneumatic bias tire (1) in which a carcass (6) extends from a tread portion (2) through sidewall portions (3) to bead cores (5) of bead portions (4), the carcass (6) includes at least two carcass plies (6A, 6B) each having carcass cords (8) tilted relative to a tire equator (C) by an angle ranging from 20° to 50°, and the at least two carcass plies (6A, 6B) are layered such that the carcass cords (8) intersect the carcass cords (8) of the other carcass plies, the manufacturing method comprising:
a green tire forming step of forming a green tire (1a) including the carcass (6); and
a vulcanization step of expanding and vulcanizing the green tire (1a) in a vulcanization mold (20), wherein
in the vulcanization step, a ground-contact surface Y, on a tire meridian cross-section, of the tread portion (2) is formed so as to have a tread profile (2a) including a crown arc part (10) and shoulder arc parts (11), and the crown arc part (10) forms a crown region (TC) including the tire equator (C), and projects outward in a tire radial direction with a radius of curvature R1, and the shoulder arc parts (11) form shoulder regions (TS) that smoothly connect to both ends of the crown arc part (10), and project outward in the tire radial direction with a radius of curvature R2 greater than the radius of curvature R1.

2. The manufacturing method for manufacturing the pneumatic bias tire (1) according to claim 1, wherein the radius of curvature R1 of the crown arc part (10) ranges from 500 mm to 2000 mm, and the radius of curvature R2 of the shoulder arc parts (11) ranges from 1500 mm to 4000 mm.

3. The manufacturing method for manufacturing the pneumatic bias tire (1) according to claim 1 or 2, wherein a clip width BW is greater than a rim width of a normal rim for the tire, and the clip width BW represents a distance in a tire axial direction between outer surfaces of the bead portions (4) in the vulcanization mold.

4. A pneumatic bias tire (1) in which a carcass (6) extends from a tread portion (2) through sidewall portions (3) to bead cores (5) of bead portions (4), and the carcass (6) includes at least two carcass plies (6A, 6B) each having carcass cords (8) tilted relative to a tire equator (C) by an angle ranging from 20° to 50°, and the at least two carcass plies (6A, 6B) are layered such that the carcass cords (8) intersect the carcass cords (8) of the other carcass plies, wherein
in a 5% internal pressure state in which the pneumatic bias tire (1) is mounted to a normal rim and inflated to 5% of a normal internal pressure, an angle α of each carcass cord (8) relative to the tire equator (C) ranges from 20° to 50°, and a ground-contact surface Y, on a tire meridian cross-section, of the tread portion (2) is formed so as to have a tread profile (2a) including a crown arc part (10) and shoulder arc parts (11), and the crown arc part (10) forms a crown region (TC) including the tire equator (C), and projects outward in a tire radial direction with a radius of curvature R1, and the shoulder arc parts (11) form shoulder regions (TS) that smoothly connect to both ends of the crown arc part (10), and project outward in the tire radial direction with a radius of curvature R2 greater than the radius of curvature R1, and
in a normal internal pressure state where the bias tire (1) is mounted to the normal rim and inflated to a normal internal pressure under no load, the angle α of the carcass cords (8) is less than the angle α of the carcass cords (8) in the 5% internal pressure state, and the radius of curvature R1 is greater than the radius of curvature R2.

5. The pneumatic bias tire (1) according to claim 4, wherein, in the 5% internal pressure state, the radius of curvature R1 of the crown arc part (10) ranges from 500 mm to 2000 mm, and the radius of curvature R2 of the shoulder arc parts (11) ranges from 1500 mm to 4000 mm.

6. The pneumatic bias tire (1) according to claim 4 or 5, wherein, in the normal internal pressure state, a camber value KL that represents a distance in the tire radial direction between the tire equator (C) and tread ground-contact ends ranges from 0.03 times a tread width TW that represents a distance in a tire axial direction between the tread ground-contact ends, to 0.1 times the tread width TW.

7. The pneumatic bias tire (1) according to one of claims 4 to 6, wherein, in the 5% internal pressure state, a distance CW, in the tire axial direction, to the tire equator (C) from a connection position (P) between the crown arc part (10) and each shoulder arc part (11), ranges from 0.1 times half the tread width TW/2 that represents a distance from each tread ground-contact end to the tire equator (C), to 0.5 times half the tread width TW/2.

8. The pneumatic bias tire (1) according to claim 5, wherein, in a normal load state where the bias tire (1) inflated to the normal internal pressure is under a normal load, the ground-contact surface Y has a ratio Lc/Ls that ranges from 0.85 to 1.5, and Lc represents a ground-contact length, at the tire equator (C), in a tire circumferential direction, and Ls represents a maximum ground-contact length, in each shoulder region TS, in the tire circumferential direction.

9. A pneumatic bias tire (1), for use in a racing kart, according to one of claims 4 to 8.
